# EUROPÄISCHE PATENTSCHRIFT

(11) **EP 2 370 978 B1**
(45) Veröffentlichungstag und Bekanntmachung des Hinweises auf die Patenterteilung: **13.03.2013**
(21) Anmeldenummer: 09760838.4
(22) Anmeldetag: 23.11.2009
(51) Int. Cl.: G21C 3/42, G21C 3/58, G21C 3/62, G21C 21/02

(54) **VERFAHREN UND ANORDNUNG ZUR HERSTELLUNG VON BRENNSTOFFKERNEN**
METHOD AND ARRANGEMENT FOR PRODUCING FUEL CORES
PROCÉDÉ ET DISPOSITIF DE FABRICATION DE PASTILLES DE COMBUSTIBLE

(30) Priorität: 01.12.2008 DE 102008055468
(43) Veröffentlichungstag der Anmeldung: 05.10.2011
(73) Patentinhaber: NUKEM Technologies GmbH, 63755 Alzenau (DE)
(72) Erfinder: HEIT, Werner, 63589 Grossenhausen (DE); KADNER, Martin, 63477 Maintal (DE); BRAEHLER, Georg, 63579 Freigericht (DE); FROSCHAUER, Karl, 63579 Freigericht (DE)
(74) Vertreter: Stoffregen, Hans-Herbert
(86) Internationale Anmeldenummer: PCT/EP2009/065666
(87) Internationale Veröffentlichungsnummer: WO 2010/063603

(56) Entgegenhaltungen:
- EP-A1- 1 752 991
- DE-A1- 1 817 092
- DE-A1- 2 121 185
- DE-A1- 2 757 602
- JP-A- 6 191 851

## Beschreibung

Die Erfindung bezieht sich auf ein Verfahren zur Herstellung kugelförmiger Brenn- und/oder Brutstoffkerne einer Größe vorzugsweise im Bereich zwischen 300 µm und 800 µm, insbesondere zur Herstellung von Kernen aus Uranoxid und/oder Urancarbid und/oder einem uranhaltigen Mischoxid und/oder Mischcarbid durch Vertropfen einer Gießlösung enthaltend Uranylnitrat in ein ammonikalisches Fällbad zur Bildung von Mikrokugeln, Altern und Waschen so hergestellter Mikrokugeln in einer Ammoniaklösung. Trocknen sowie thermisches Behandeln. Ferner bezieht sich die Erfindung auf eine Anordnung zur Herstellung von kugelförmigen Brenn- und/oder Brutstoffkugeln, umfassend ein Fällbad, eine Alterungsstrecke, eine Wascheinrichtung und eine Wärmebehandlungseinrichtung zum Trocknen und Kalzinieren sowie Übergabeeinrichtungen für während der Erstellung hergestellte Mikrokugeln und aus diesen erzeugten Kerne.

Bei den als externe Gelierung bezeichneten Gelfällungsverfahren entsteht unlösliches Ammoniumdiuranat (ADU), sowie als Nebenprodukt wasserlösliches Ammoniumnitrat. Weitere Zusatzstoffe zur Gießlösung, wie Tetrahydrofurylalkohol (THFA) und gegebenenfalls Harnstoff, müssen durch Waschen mit Ammoniakwasser ebenfalls aus den ADU-Gelkügelchen ausgewaschen werden.

Als Stand der Technik sind beispielsweise folgende Veröffentlichungen zu nennen, die sich mit der Tropfenbildung an Luft, der Vorverfestigung der Tropfen in Ammoniakgas und dem Sammeln der Mikrokugeln in ammoniakalischem Fällbad befassen: DE-B-20 37 232, DE-B- 1 817 092, DE-B-24 59 445, DE-B-26 01 684, DE-B-29 22 686, DE-A-27 14 873.

In der Literaturstelle NUCLEAR TECHNOLOGY, Vol. 42 (Februar 1979), Seiten 163 - 171 "Preparation of Uranium Kernels by an External Gelation Process" wird der EGU-Prozess (External Gelation of Uranium) der Kemforschungsanlage Jülich zur Herstellung von Uranoxid- bzw. Urancarbidkemen vom Durchmesser bis zu 0,3 mm aus wiederaufgearbeitetem Uran 233 in heißen Zellen zusammengefasst.

Die Literaturstelle Journal of NUCLEAR SCIENCE and TECHNOLOGY, Vol. 41. No.9, Seiten 943 - 948 (September 2004) "Preparation of UO2 Kernel for HTR-10 Fuel Element" beschreibt die Herstellung von UO₂-Kemen nach dem Gelfällungsverfahren durch externe Gelierung.

Bei den bekannten Gelfällungsverfahren werden grundsätzlich nachstehende Verfahrensschritte durchgeführt:
- Gel-Mikrokugeln plus ammoniakalisches Fällbad,
- Transport der Mikrokugeln im Fällbad,
- Altern im Alterungswasser,
- Waschen mit Ammoniakwasser bis zum vorgegebenen Endwert,
- Transport der Mikrokugeln im Waschwasser bis zum Trockner,
- Abscheidung der Mikrokugeln auf dem Trockner und
- Weiterbehandlung der getrockneten Kerne.

Allerdings werden die Kinetik des Stoffaustausches und die Dynamik der einzelnen Verfahrensschritte zur Erzeugung einheitlicher, bruch- und rissfreier Kerne nicht hinreichend berücksichtigt.

Bei der Herstellung von kleinen Kernen im Bereich von 200 µm Enddurchmesser spielt die Kinetik des Stoffaustausches nicht so eine große Rolle wie bei Kernen vom Enddurchmesser von 500 µm und mehr, bei denen das Endvolumen mehr als 15 mal größer ist. Dies ist vor allem im Bereich der Erzeugung der Gel-Mikrokugeln durch chemische Reaktion sowie die folgenden Schrumpfungsprozesse im Fällbad, beim Altem, Waschen und Trocknen von entscheidender Bedeutung für die Erhaltung der Kugelform.

Die Vielzahl der im Fällbad ablaufenden kinetischen Reaktionen und Konzentrations-änderungen können eine eindeutige Verschlechterung der Produktqualität verursachen. Das Eintropfen der ammoniakfreien Gießlösung führt zu einer Verdünnung in Bezug auf Ammoniak und gleichzeitig zu einer Erhöhung der Konzentrationen an Ammoniumnitrat und Hilfsstoffen wie THFA und Harnstoff. Bei kontinuierlicher Arbeitsweise ist die Verwendung eines ammoniakalischen Gleichgewichtsfällbades erforderlich, um eine gleichbleibend gute Produktqualität sicherzustellen.

Bei der bisherigen Behandlung jedoch werden die Gel-Mikrokugeln mit einem großen Teil des Fällbades auszutragen, und erst danach wird das Fällbad abgetrennt und zurückgeführt.

Durch Waschen der gealterten Mikrokugeln mit Ammoniakwasser werden die wasserlöslichen Stoffe Ammoniumnitrat und Hilfsstoffe, wie Tetrahydrofurylalkohol (THFA) und Harnstoff, entfernt. Üblicherweise wird dieser Arbeitsschritt stufenweise in einem kritikalitätssicheren rotierenden Flachtank durchgeführt, wobei die Mikrokugeln zusammen mit dem Ammoniakwasser in Bewegung sind. Dieser Vorgang wird mehrmals wiederholt, bis der gewünschte Wascheffekt erreicht ist.

Ein weiterer, häufig nicht genügend beachteter Verfahrensschritt ist die Dynamik beim Transport der Mikrokugeln im Hinblick auf die gleichmäßige Behandlung aller Teilchen. Selbst beim Trocknen können Mikrokugeln unterschiedlich schrumpfen und eine schalenförmige Struktur bekommen oder platzen.

Die Qualität der Brennstoffkerne muss eine Reihe von Anforderungen erfüllen, einerseits in Hinblick auf ihre Weiterverarbeitung zu beschichteten Partikeln und Graphitbrennelementen, andererseits hinsichtlich eines guten Bestrahlungsverhaltens im Reaktor.

Als Spezifikation für die erzeugten Brennstoffkerne werden verlangt:
- die Festigkeit und Abriebfestigkeit,
- ein enger Durchmesserbereich bei geringer Standardabweichung,
- nahezu ideale Kugelform,
- die gleiche Struktur und Porosität aller einzelnen produzierten Kerne bei hoher Dichte und exakter chemischer Zusammensetzung.

Bei der Herstellung von größeren Kernen vom Enddurchmesser zwischen 300 µm und 800 µm und größer wird beim Gelfällungsverfahren zusätzlich der organische Hilfsstoff Polyvinylalkohol (PVA) in Form einer wässerigen Lösung verwendet, der während der Fällung des Urans mit dem gebildeten ADU ein Addukt bildet. Das ADU wird an Luft thermisch zersetzt unter Bildung von UO₃. Bei diesem Kalzinierungsprozess wird auch das PVA bei Temperaturen oberhalb 300 °C verflüchtigt.

Um kugelförmige Nuklearpartikel zu reinigen, wird nach der DE-A-27 57 602 ein Gegenstromwäscher in Form eines Kaskadenwäschers verwendet.

In einem Heißluftofen nach der JP-A-06191851 werden Kugeln aus Ammoniumdiuranat in Schalen angeordnet und zur Gewinnung von UO₃-Kernen kalziniert.

Der vorliegenden Erfindung liegt die Aufgabe zu Grunde, ein Verfahren und eine Anordnung der eingangs genannten Art so weiterzubilden, dass die Besonderheiten der Uranchemie für Kerne insbesondere eines Durchmessers im Bereich zwischen 300 µm und 800 µm berücksichtigt und für ein kontinuierliches Produktionsverfahren bei gleichbleibend hoher Kernqualität geeignet ist.

Die Aufgabe wird erfindungsgemäß verfahrensmäßig im Wesentlichen dadurch gelöst, dass die Mikrokugeln aus dem Fällbad über einen ersten Separator abgetrennt und zum Altern dem ammonikalischen Alterungswasser zugeführt werden, dass die Mikrokugeln über eine Übergabeeinrichtung von dem Alterungswasser an einen mehrstufigen Kaskadenwäscher übergeben werden, in dem die Mikrokugeln zumindest frei von Ammoniumnitrat gewaschen werden, und dass nach Trocknen der Mikrokugeln während einer thermischen Behandlung die Mikrokugeln in Monolage verteilt kalziniert werden, wobei Kontaktzeit der Mikrokugeln mit Fällbadflüssigkeit bis zum Eintritt in das Alterungswasser für jede Mikrokugel gleich oder in etwa gleich ist.

Insbesondere durch den ersten Separator wird erreicht, dass bei allen vertropften (gegossenen) Teilchen die gleiche Zeitspanne zwischen Entstehung im Fällbad und Sammlung im ammoniakalischen Alterungswasser eingehalten wird. Erfindungsgemäß erfüllt der Separator damit die Bedingungen für alle Gel-Mikrokugeln, um unter gleichen Bedingungen gebildet, im chemischen Gleichgewicht des Fällbads transportiert und im ammoniakalischen Alterungswasser gesammelt zu werden.

Dabei umfasst der Separator insbesondere einen aus einem kreisrunden, ebenen Lochsieb aus Edelstahl bestehenden Boden, über den sich ein in Sektoren geteilter Metallzylinder langsam dreht, der oben offen ist und unten dicht auf dem Lochsieb aufsitzt. Das Lochsieb kann dabei nach einem speziellen Ätzverfahren hergestellt sein, wobei der Siebdurchmesser, also die Maschenweite im Bereich zwischen 300 µm und 500 µm liegen sollte. Die Gel-Mikrokugeln werden mit Hilfe eines Schleusensystems unterhalb des Fällbades, also der Gießanlage zusammen mit Fällbadflüssigkeit in einen der Sektoren des Separators eindosiert, dann von Position zu Position weitergeschoben, um in der letzten Drehposition, bevor ein erneutes Befüllen erfolgt, durch eine Öffnung wie Rohr zu fallen, um dem ammoniakalischen Alterungswasser, zugeführt zu werden.

Aufgrund des Lochsiebes im Separator läuft die Fällbad-Transportflüssigkeit durch dessen Öffnungen hindurch. Dieses Durchlaufen bzw. Abtropfen erfolgt in jeder Position vor der Übergabe an das Alterungswasser. Sind sechs Sektoren vorhanden, läuft die Flüssigkeit in 5 Sektorpositionen ab. Die das Lochsieb durchsetzende Fällbadflüssigkeit wird sodann in den Fällbadkreislauf zurückgeführt.

Insbesondere ist vorgesehen, dass ammoniakalisches Alterungswasser zumindest in Bezug auf in den Mikrokugeln enthaltendes Ammoniumnitrat auf Gleichgewichtsbedingung eingestellt wird. Dies sollte auch in Bezug von in den Mikrokugeln vorhandenen Hilfsstoffen wie THFA oder Harnstoff der Fall sein.

Gleichgewichtsbedingung bedeutet, dass die einzelnen Mikrokugeln jeweils in Bezug auf einzelne Komponenten im Verhältnis zueinander gleiche Konzentrationsverhältnisse aufweisen, wobei selbstverständlich die Konzentrationen der einzelnen Bestandteile selbst von einander abweichen können. Auch nehmen während des Durchfallens durch die Alterungsstrecke die Konzentrationen ab. Die relativen Konzentrationsverhältnisse der Komponenten untereinander bleiben im Wesentlichen bestehen. Es erfolgt ein Austausch von Komponenten mit dem Alterungswasser derart, dass im erforderlichen Umfang die Konzentration der Komponenten abnimmt, um ein gewünschtes Schrumpfen der Mikrokugeln im Alterungswasser zu erzielen. Durch die Gleichgewichtsbedingungen wird sichergestellt, dass die Kugeln nach dem Verlassen des Alterungswassers einen gleichen oder nahezu gleichen Durchmesser aufweisen.

Es erfolgt in der Alterungsstrecke ein gleichmäßiger Austausch von Komponenten mit dem Alteruneswasser, wobei am Ende der Alterunasstrecke die Konzentrationen von zumindest THFA und NH₄NO₃ und NH₄OH denen in dem Alterungswasser entsprechen. Ist Harnstoff enthalten, gilt dies auch für diese Komponente.

Insbesondere ist das ammoniakalische Alterungswasser derart eingestellt, dass ein Austausch von maximal 15 Gew.-%, insbesondere zwischen 10 und 15 Gew.-% des THFA mit H₂O erfolgt. Hierdurch wird das Schrumpfen der Mikrokugeln begünstigt.

Werden die Mikrokugeln von dem Separator an das auf Raumtemperatur eingestellte Alteungswasser übergeben, so wird dieses sodann auf eine Temperatur T1 mit vorzugsweise 60 °C ≤ T1≤ 80 °C aufgeheizt, um sodann die Mikrokugeln über eine Zeit t mit vorzugsweise 50 min ≤ t ≤ 70 min bei der Temperatur T1 zu altem. Anschließend, also nach der Zeit t werden das Alterungswasser auf Raumtemperatur und somit auch die Mikrokugeln abgekühlt und die Mikrokugeln entnommen. Das Erwärmen und Abkühlen des Alterungswassers kann mit zumindest einem Wärmetauscher durchgeführt werden.

Nach der Alterung werden die Mikrokugeln insbesondere über einen zweiten Separator, der einen Aufbau wie der erste Separator aufweisen kann, dem Kaskadenwäscher zugeführt, der mehrere Waschstufen umfasst. Dabei werden die Waschstufen derart von Waschwasser durchströmt, dass die Mikrokugeln in jeder Waschstufe weitgehend in Schwebe gehalten werden.

Bevorzugterweise gelangt ein siebenstufiger Kaskadenwäscher zum Einsatz, der sieben Kreisläufe unterschiedlicher Waschwasserkonzentrationen, d. h. Wasser mit unterschiedlichen Anteilen von Ammoniumnitrat, THFA, Harnstoff, Ammoniumhydroxid umfasst.

Ferner ist eine Dosierpumpe für schwach ammoniakalisches Reinstwasser vorhanden, das von unten nach oben durch den Kaskadenwäscher strömt und dabei aufkonzentriert wird.

Somit strömt durch den Kaskadenwäscher zum einen das zu Beginn schwach ammonikalische Reinstwasser von unten nach oben durch die Waschstufen. Zum anderem erfolgt eine Umwälzung in jeder Kaskadenstufe, in der jeweils eine gleich bleibende Zusammensetzung des Waschwassers vorlegt.

Durch das im Kreislauf strömende Waschwasser wird die Sinkgeschwindigkeit und damit die Verweildauer der Mikrokugeln in den einzelnen Kaskadenstufen eingestellt.

Den einzelnen Waschstufen des Kaskadenwäschers wird das Waschwasser vorzugsweise über einen am Boden eines Trichters einer Waschstufe vorhandenen abstandsveränderbaren Ringspalt zugeführt. Hierdurch kann eine überaus feine Dosierung, also Einstellung der Strömungsgeschwindigkeit des Waschwassers erfolgen, um enwähntermaßen die Mikrokugeln im erforderlichen Umfang in Schwebe zu halten, also die Sinkgeschwindigkeit vorzugeben.

Nach dem Waschen der Mikrokugeln können diese in einem Durchlaufofen wie Banddurchlaufofen getrocknet und sodann kalziniert werden. Das Trocknen kann an Luft bei einer Temperatur bis zu 120 °C durchgeführt werden. Durch den Trockenofen können die gewaschenen Mikrokugeln auf einem Siebgewebe transportiert werden. Hierzu können die Mikrokugeln mittels eines Aufgaberüssels im Wesentlichen einlagig zugeführt werden, wobei sich der Aufgaberüssel zwangsgesteuert hin und her über das Transportband bewegen sollte. Da ein Siebgewebe verwendet wird, kann das zusammen mit den Mikrokugeln verteilte Reinstwasser abfließen, um unterhalb des Siebgewebe gesammelt und gegebenenfalls erneut im Kaskadenwäscher eingesetzt zu werden.

Um ein Verkleben der Mikrokugeln beim Trocknen zu vermeiden, die als nasse Kerne zu bezeichnen sind, kann dem ammoniakalischen Reinstwasser eine kleine Menge von wasserlöslichem Fettalkohol, z. B. 0,5 g Lutensol A8 je Liter Reinstwasser, oder ein anderes Detergens zugesetzt werden.

Die getrockneten Kerne werden sodann mittels Unterdruck z. B. mit einem Absaugrüssel von dem Transportband angesaugt, um anschließend kalziniert zu werden. Hierzu können die getrockneten Kerne zuvor in einem Zyklon abgeschieden und in einem Vorratsbehälter gesammelt werden.

Alternativ kann in einem Durchlaufofen sowohl das Trocknen als auch das Kalzinieren erfolgen. Unabhängig hiervon sollte das Kalzinieren während des Transportes durch einen oder den Durchlaufofen derart erfolgen, dass zuvor die getrockneten Kerne in Metallschalen in Monolage eingebracht werden, um einen sehr guten Wärmeübergang bei der exothermen Reaktion zu gewährleisten, wobei ADU und vorhandenes PVA als Hilfsstoff thermisch zersetzt werden unter Bildung von UO₃-Kernen, während NH₃, CO₂ und Wasserdampf als Bestandteile der Abluft abgegeben werden.

Die Verteilung der getrockneten Kerne auf den Metallschalen kann mittels einer Dosiervorrichtung unter Verwendung vorzugsweise eines Aufgaberüssels erfolgen, durch den die genaue Menge an Kernen für die Ausbildung der Monolage festgelegt wird, sowie durch leichtes Rütteln der Schale, dass die getrockneten Kerne alle freien Plätze auf der Schale belegen.

Nach dem Kalzinieren können die Kerne erfingdungsgemäß mit Hilfe eines weiteren beweglichen Absaugrüssels bei geringem Unterdruck von den Schalen entfernt, in einem Zyklon abgeschieden und in einem Vorratsbehälter gesammelt werden.

Erfolgt das Trocknen und Kalzinieren während des Durchlaufs durch einen einzigen Ofen, so sollten die gewaschenen Mikrokugeln unmittelbar in entsprechenden Metallschalen aufgeben werden.

Aus Obigem ergibt sich u. a., dass sich das erfindungsgemäße Verfahren durch nachstehende Schritte auszeichnen kann, die jeweils für sich und/oder in Kombination erfinderisch sind:
- die im ammoniakalischen Fällbad erzeugten Mikrokugeln werden mittels eines ersten Separators vom Fällbad getrennt und gelangen in ammoniakalisches Alterungswasser, in dem die Mikrokugeln auf Alterungstemperatur aufgeheizt werden und entsprechend der erforderlichen Alterungszeit in dem Alterungswasser verweilen. Dabei stellt der erste Separator sicher, dass die Kontaktzeit der Mikrokugeln mit der Fällbadflüssigkeit zwischen dem Entstehen der Mikrokugeln und dem Eintritt in das Alterungswasser, für jede Mikrokugel gleich oder in etwa gleich ist.
- die Mikrokugeln werden anschließend mittels eines zweiten Separators vom Alterungswasser abgetrennt, um in die erste Waschstufe eines mehrstufigen Kaskadenwäschers zu gelangen, in dem die Mikrokugeln mit Ammoniakwasser nahezu frei von Ammoniumnitrat und Hilfsstoffen wie THFA und Harnstoff gewaschen werden,
- die Mikrokugeln werden sodann mit Hilfe einer Dosiervorrichtung zusammen mit dem Ammoniakwasser der letzten Waschstufe durch einen gesteuerten, beweglichen Aufgaberüssel auf ein Transportband aus Siebgewebe eines Banddurchlaufofens gefördert, um bei einer Temperatur bis zu 120 °C getrocknet zu werden,
- die getrockneten Kerne werden entweder anschließend mit Hilfe einer Entnahmevorrichtung unter Verwendung eines gesteuerten, beweglichen Absaugrüssels durch Absaugen vom Siebgewebe und Abscheiden mittels Zyklon in einem Vorratsbehälter gesammelt, um sodann mit Hilfe einer Dosiervorrichtung unter Verwendung eines Aufgaberüssels auf Metallschalen abgegeben zu werden, in denen die getrockneten Kerne durch leichtes Rütteln in Monolage verteilt werden, um sodann durch die Heizung eines zweiten Durchlaufofens transportiert und bis zu einer Endtemperatur von ca. 460 °C kalziniert zu werden oder
- die gewaschenen Kerne werden in einem Banddurchlaufofen sowohl getrocknet als auch kalziniert, wobei zum Trocknen und Kalzinieren die gewaschenen Mikrokugeln in Monolage auf Metallschalen abgegeben werden.

Eine Anordnung zur Herstellung von kugelförmigen Brut- und/oder Brennstoffkernen zuvor beschriebener Art zeichnet sich dadurch aus, dass zwischen dem Fällbad und der Alterungsstrecke eine erste Übergabeeinrichtung in Form eines Separators angeordnet ist, der einen in Sektoren unterteilten über ein einen Ausschnitt aufweisendes Lochsieb als Boden drehbaren Zylinder aufweist, wobei nacheinander jeder Sektor in einer bodenseitig vom Lochsieb abgedeckten ersten Position auf die Austrittsöffnung des Fällbades ausgerichtet und nach Drehen des Zylinders um den Winkel α in einer zweiten Position auf den Ausschnitt des Lochsiebs ausgerichtet ist, der mit der Alterungsstrecke in Verbindung steht. Der Winkel α beläuft sich dabei auf 360° geteilt durch die Anzahl der Sektoren.

Unterhalb des Lochsiebs ist eine Flüssigkeitsaufnahmeeinrichtung vorgesehen, die mittelbar oder unmittelbar mit dem Zulauf des Fällbades verbunden ist.

Das Lochsieb des Separators sollte aus Edelstahl bestehen und eine Maschenweite d mit 300 µm ≤ d ≤ 500 µm aufweisen. Der Zylinder selbst besteht aus Metall und sollte dicht auf dem Lochsieb aufsitzen.

Insbesondere ist vorgesehen, dass der Zylinder in n Sektoren, mit n ≥ 3, insbesondere n = 6 unterteilt ist.

Die Alterungsstrecke umfasst einen von einem Siebgewebe oder Lochsieb umgebenen und die Mikrokugeln aufnehmenden Hohlzylinderraum, der zum Alterungswassertransport beabstandet von einem Gehäuse umgeben ist. Des Weiteren ist die Alterungsflüssigkeit in einem zumindest einen Wärmetauscher enthaltenden Kreislauf strömbar, in dem das Gehäuse integriert ist.

Mit Hilfe des Wärmetauschers wird das Alterungswasser auf die gewünschte Temperatur erhitzt bzw. abgekühlt. Selbstverständlich kann zum Aufheizen bzw. Abkühlen jeweils ein gesonderter Wärmetauscher zum Einsatz gelangen.

Des Weiteren ist vorgesehen, dass die Alterungsstrecke mit einer als zweiter Separator ausgebildeten und die Alterungsstrecke transportmäßig mit der Wascheinrichtung verbindenden zweiten Übergabeeinrichtung verbunden ist. Dabei ist vorgesehen, dass der zweite Separator entsprechend dem ersten Separator ausgebildet ist.

Die Wascheinrichtung selbst ist als Kaskadenwäscher mit m-Waschstufen ausgebildet, wobei m ≥ 2, insbesondere 2 ≤ m ≤ 8, bevorzugterweise m = 7 ist.

Jede Waschstufe sollte bodenseitig als Trichter mit einer Öffnung ausgebildet sein, die über eine Absperreinrichtung wie Düsenteller in gewünschtem Umfang verschließbar ist. Hierdurch ist die Menge des zuströmenden Waschwassers bzw. dessen Geschwindigkeit steuer- bzw. regelbar und somit auch die Sinkgeschwindigkeit der von oben nach unten durch den Kaskadenwäscher fallenden Mikrokugeln.

In Weiterbildung ist vorgesehen, dass eine waschwasserführende Leitung unterhalb der Abspenreinrichtung endet. Ferner sollte innerhalb der Leitung ein Stellelement wie biegsame Welle verlaufen, die zum Verstellen der Absperreinrichtung mit dieser verbunden ist.

Des Weiteren ist unterhalb des Trichters eine Flüssigkeitsauslassöffnung vorgesehen, um das Waschwasser in jeder Stufe im Kreislauf strömen zu lassen.

Die einzelnen Waschstufen sind übereinander angeordnet, wobei die von dem Gehäuse einer ersten Waschstufe ausgehende Flüssigkeitsauslasstiffnung Auslass für eine unterhalb der ersten Waschstufe bzw. dem Gehäuse und mit diesem flussigkeitsdicht verbundenen zweiten Waschstufe ist.

Des Weiteren ist bodenseitig in der untersten Waschstufen ein Zulauf für schwach ammoniakalisches Waschwasser vorgesehen, das durch sämtliche Waschstufen hindurchströmt, um aufkonzentriert im Kopfbereich der obersten Waschstufe abgeleitet zu werden.

Der Wascheinrichtung ist zumindest ein Durchlaufofen nachgeordnet, durch den die gewaschenen Mikrokugeln über eine Transporteinrichtung förderbar sind. Dabei kann die Transporteinrichtung ein endloses Transportband aus Siebgewebe sein.

Es besteht jedoch auch die Möglichkeit, die Transporteinrichtung aus aneinander gereihten Metallschalen mit jeweils einem gelochten Boden auszubilden, in die die gewaschenen Mikrokugeln eingebracht werden. Die Maschenweite des gelochten Bodens sollte im Bereich zwischen 300 µm und 500 µm liegen.

Die gewaschenen Mikrokugeln werden über eine Aufgabeeinrichtung wie Aufgaberüssel auf die Transporteinrichtung wie das Transportband bzw. die Metallschalen aufgegeben und nach dem Trocknen bzw. Kalzinieren mittels Unterdruck abgesaugt. Dies kann gleichfalls über einen Absaugrüssel erfolgen.

Die abgesaugten getrockneten bzw. kalzinierten Kerne werden vorzugsweise über einen Zyklon abgeschieden und sodann in einem Vorratsbehälter gesammelt.

Kann das Trocknen und das Kalzinieren in verschiedenen Durchlauföfen erfolgen, so sieht eine Weiterbildung der Erfindung vor, dass ein Durchlaufofen mehrere Wärmezonen aufweist, wobei zumindest eine Wärmezone eine Trockenzone und eine weitere Wärmezone eine Kalzinierzone ist.

Insbesondere ist vorgesehen, dass der Durchlaufofen im Umluftbetrieb zumindest bereichsweise betreibbar ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung eines Separators im Schnitt und Draufsicht,

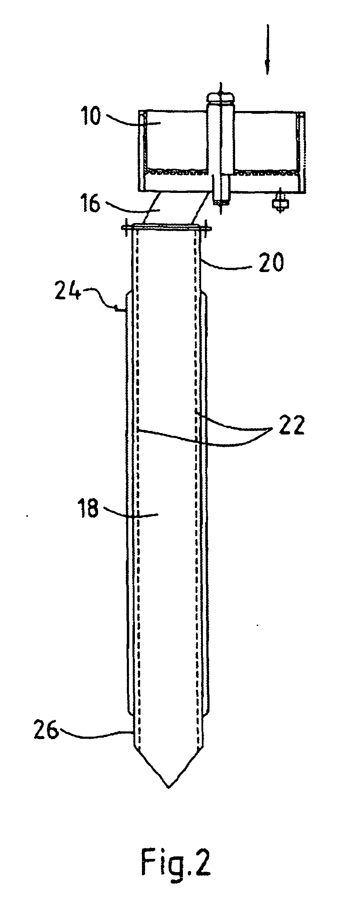

- Fig. 2: eine Prinzipdarstellung einer Alterungsstrecke,
- Fig. 3: einen Waschturrn,
- Fig. 4: einen Ausschnitt des Waschturms gemäß Fig. 3,
- Fig. 5: eine Aufgabevorrichtung auf ein Siebband,
- Fig. 6: eine Absaugeinrichtung von einem Siebband,
- Fig. 7: eine erste Ausführungsform eines Banddurchlaufofens,
- Fig. 8: eine zweite Ausführungsform eines Durchlaufofens,
- Fig. 9: eine Prinzipdarstellung einer dritten Ausführungsform eines Durchlaufofens und
- Fig. 10: ein Fließbild zur Herstellung von Brennstoffkemen.

Den Figuren sind Bauelemente einer Anlage bzw. Anordnung zur Herstellung von kugelförmigen Brenn- und/oder Brutstoffkemen im Durchmesserbereich bis 800 µm zu entnehmen, insbesondere von Urankernen in Oxid- und/oder Karbidform mit und ohne Zusätzen von Thorium, Plutonium oder Mischungen dieser, insbesondere jedoch mit Zusatz von Hilfsstoffen wie Tetrahydrofurylalkohol (THFA), Harnstoff sowie Polyvinylalkohol (PVA). Der Herstellungsprozess schließt das Vertropfen (Gießen) von wässrigen, salpetersauren Lösungen, Vorhärten der Tropfen in einer Ammoniakgasatmosphäre und Aushärten in wässriger Ammoniaklösung sowie anschließendes Altern, Waschen, Trocknen und thermisches Behandeln ein.

Bei einem entsprechenden als externe Gelierung bezeichneten Gelfällungsverfahren entsteht unlösliches Ammoniumdiuranat (ADU) sowie als Nebenprodukt wasserlösliches Ammoniumnitrat. Weitere Zusatzstoffe zur Gießlösung wie THFA und ggfs. Harnstoff müssen durch Waschen mit Ammoniakwasser ebenfalls aus den ADU-Gelkügelchen ausgewaschen werden. Bei den erfindungsgemäß herzustellenden größeren Kernen mit Enddurchmessern zwischen 300 µm und 800 µm wird beim Gelfällungsverfahren zusätzlich der organische Hilfsstoff Polyvinylalkohol (PVA) in Form einer wässrigen Lösung verwendet, der während der Fällung, des Urans mit dem gebieldeten ADU ein Addukt bildet. Das ADU wird beim Kalzinierungsprozess an Luft thermisch unter Bindung von UO₃ zersetzt. Bei dem Kalzinierungsprozess wird auch das PVA bei Temperaturen oberhalb von 300 °C verflüchtigt.

Erfindungsgemäß ist vorgesehen, dass die Zeitspanne zwischen der Entstehung der vertropften bzw. gegossenen Teilchen im Fällbad, also der Mikrokugeln, und der Sammlung im ammoniakalischen Alterungswasser gleich oder im Wesentlichen gleich ist. Dies wird erfindungsgemäß dadurch realisiert, dass die Mikrokugeln nach dem Fällbad einem Separator oder einem gleichwirkenden Element zugeführt werden, das als Übergabeeinrichtung an die Alterungsstrecke dient. Gleichwirkendes Element ist z. B. ein Siebband. Daher ist auch Separator als Synonym für entsprechende gleichwirkende Elemente zu verstehen und auszulegen.

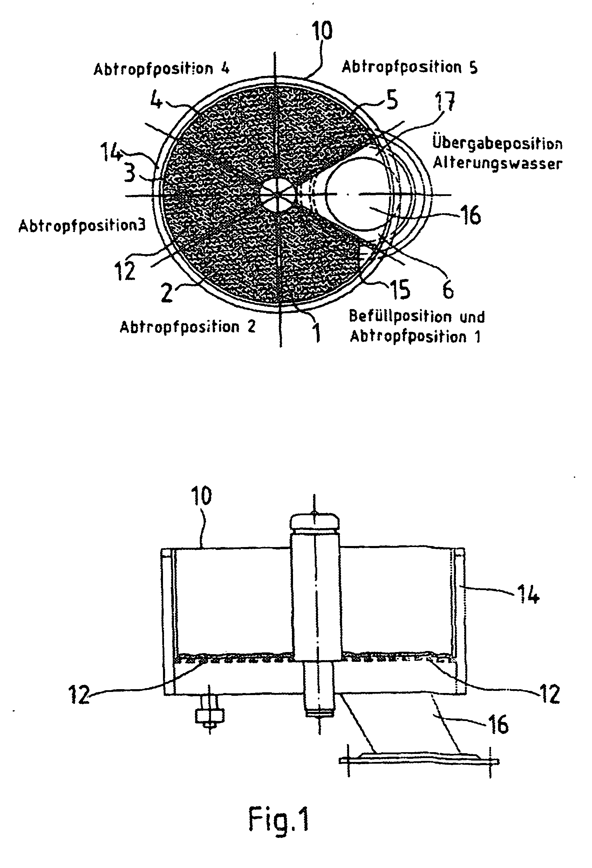

Ein entsprechender Separator 10, der erwähntermaßen einem Fällbad nachgeordnet ist, ist der Fig. 1 zu entnehmen.

Der Separator 10 besteht aus einem kreisrunden ebenen Lochsieb 12 aus Edelstahl, das bodenseitig einen in Sektoren geteilten Metallzylinder 14 abdeckt. Der Metallzylinder 14 ist fällbadseitig offen. Bevorzugterweise ist der Metallzylinder 14 in sechs Sektoren 1-6 gleicher Fläche unterteilt, weist also von einer Drehachse ausgehende Flügel bzw. Trennwände 15 auf, die sich langsam über das Lochsieb 12 drehen. Dabei sitzen die Sektoren 1-6, d. h. die Trennwände 15 zwischen den Sektoren 1-6 dicht auf dem Lochsieb 12 auf.

Das Lochsieb 12 kann nach einem speziellen Ätzverfahren hergestellt werden, wobei die Maschenweite, d. h. dessen Durchmesser im Bereich zwischen 300 µm und 800 µm liegen sollte.

Die in dem Fällbad gebildeten Gelmikrokugeln werden mit Hilfe eines Schleusensystems unterhalb der Gießanlage zusammen mit Fällbadflüssigkeit in einen Sektor (Befüllposition I) des Separators 10 eindosiert, sodann von Position zu Position (Abtropfpositionen 2-5) weitergeschoben, um sodann in der bei sechs Sektoren sechsten Position (Übergabeposition) durch einen Ausschnitt, also eine Öffnung 17 in dem Siebblech 12 über z. B. ein Rohr 16 einer Alterungsstrecke 18 zugeführt zu werden.

Die Alterungsstrecke 18 weist ein vertikal ausgerichtetes Gehäuse 20 auf, in dem sich beabstandet zu dessen Innenwandung und in dessen Längsachsenrichtung ein zylindrisches Siebgewebe 22 oder ein Lochsieb aus Edelstahl erstreckt, durch das ein zylindrischer Innenraum gebildet wird, in dem die von dem Separator 10 abgegebenen Mikrokugeln altern können. Die Beabstandung zwischen dem Siebgewebe bzw. dem Lochsieb 22 und dem Gehäuse 20 ist erforderlich, damit Alterungswasser durchströmen kann, das über Anschlüsse 24, 26 in einem Kreislauf geführt wird, in dem zumindest ein Wärmetauscher angeordnet ist. Über den Wärmetauscher wird die Alterungsflüssigkeit auf eine gewünschte Temperatur eingestellt.

So sollte bei Übergabe der Mikrokugeln von dem Separator 10 das Alterungswasser Raumtemperatur aufweisen. Sind in dem Innenraum des Gehäuses 20 im erforderlichen Umfang Mikrokugeln angesammelt, so wird das Alterungswasser z. B. auf eine Temperatur 60 °C bis 80°C, also auf die erforderliche Alterungstemperatur aufgeheizt. Nach der erforderlichen Alterungszeit von z. B. 1 h wird das Alterungswasser durch den oder einen weiteren Wärmetauscher auf Raumtemperatur abgekühlt, wobei sich gleichzeitig die in der Alterungsstrecke 18 vorhandenen Mikrokugeln mit abkühlen.

Erfindungsgemäß ist vorgesehen, dass für die gleichmäßige Behandlung der Gelmikrokugeln im ammoniakalischen Alterungswasser Gleichgewichtsbedingungen in Bezug auf Ammoniumnitrat und/oder Ammoniumhydroxid sowie den Zusatzstoffen wie THFA und Harnstoff eingehalten werden, um ein gleichmäßiges Schrumpfen der Mikrokugeln während der Wärmebehandlung zu erreichen. Bezüglich THFA kann bevorzugterweise ein Austausch von maximal 15 Gew.-% THFA, insbesondere zwischen 10 Gew.-% und 15 Gew.-% mit H₂O erfolgt. Hierdurch wird das Schrumpfen begünstigt.

Gleichgewichtsbedingungen bedeutet im vorliegenden Fall, dass die Mikrokugeln nach Verlassen des Alterungswassers im Wesentlichen eine gleiche Konzentration in Bezug auf Ammoniumnitrat bzw. THFA bzw. Harnstoff bzw. Ammoniumhydroxid aufweisen, wobei die Konzentration der Bestandteile von einander abweichen kann. Das Alterungswasser wird demzufolge derart eingestellt, dass die Mikrokugeln während des Aufenthalts in dem Alterungswasser einen gleichen Stoffaustausch erfahren, so dass die Mikrokugeln nach Verlassen des Alterungswasserverfahrens im Bezug auf den jeweiligen Bestandteil eine gleiche Konzentration aufweisen. Hierdurch wird sichergestellt, dass jede Kugel im gleichen Umfang schrumpft und nach Verlassen des Alterungswassers den gewünschten Durchmesser und Kugelgeometrie aufweist.

Die Verdeutlichung des Stoffaustausches zwischen den erzeugten Mikrokugeln im Augenblick ihrer Bildung durch die Einwirkung einer harmonischen Schwingung auf den Flüssigkeitsstrahl der Gießlösung und den Folgeprozessen Sammeln im Fällbad, Schrumpfen im Alterungswasser, Waschen mit Reinstwasser, Trocknen und Kalzinieren erfolgt in einem typischen Ausführungsbeispiel.

Eine Uranylnitratlösung wird mit Ammoniaklösung auf pH2 eingestellt, danach wird eine wässrige Lösung von Polyvinylalkohol (PVA) zugemischt. Diese Lösung wird geteilt: Im Fall A wird diese Lösung mit Reinstwasser auf eine Urankonzentration von 120 g U/l und 25 g PVA/l eingestellt (Gießlösung A). Im Fall B wird der zweite Teil der Lösung mit Tetrahydrofurfurylalkohol (THFA) und wenig Reinstwasser vermischt, wobei als Gießlösung B folgende Konzentrationen vorliegen: 120 g U/l, 25 g PVA/l und 300 g THFA/1. Gießlösung B enthält also zusätzlich den wasserlöslichen Stoff THFA .

Beide Gießlösungen A und B werden unter gleichen Bedingungen in Mikrokugeln umgewandelt. Aus jeder Lösung werden unter Verwendung von Düsen Flüssigkeitsstrahlen gebildet, die unter dem Einfluss einer harmonischen Schwingung bei einer Frequenz von 100 Hz Tropfen bilden. Bei einem Durchfluss von 1,9 l/h entstehen Tropfen vom Durchmesser 2150 µm. Diese Tropfen werden in einer Ammoniakgas-Fallstrecke oberflächlich verfestigt und im ammoniakalischen Fällbad gehärtet. Die gehärteten Mikrokugeln haben Gelstruktur, sie bestehen aus Ammoniumdiuranat plus Polyvinylalkohol als Addukt (ADU + PVA) und enthalten weitere gelöste Stoffe, wie Ammoniumnitrat und Ammoniumhydroxid (bei Sorte A) sowie zusätzlich THFA (bei Sorte B).

Mikrokugeln der Sorte A und B wurden nach jedem Prozessschritt mikroskopisch in Bezug auf Durchmessergröße vermessen.
Die Ergebnisse zeigen Folgendes: Mikrokugeln der Sorte A (ohne THFA) haben sowohl nach dem Altern als auch nach dem Waschen eine breite Durchmesserverteilung, das heißt, sie schrumpfen sehr unterschiedlich, obwohl die Zusammensetzung der Hauptbestandteile ADU + PVA gleich ist. Die Mikrokugeln der Sorte B (mit THFA) haben einen sehr engen Größenbereich und schrumpfen insbesondere nach dem Altern und Waschen bevorzugt durch den Stoffaustausch zwischen THFA und Alterungswasser bzw. Reinstwasser gleichmäßig. Auch nach dem Trocknen und Kalzinieren liegt der Durchmesserbereich der Mikrokugeln in engen Grenzen.

Die Ergebnisse zeigen, dass im Alterungsbad eine gleichmäßige Schrumpfung der Mikrokugeln durch den Stoffaustausch zwischen THFA und Ammoniakwasser stattfindet. Dieser Stoffaustausch erstreckt sich auch auf die anderen Komponenten, wie NH₄NO₃, NH₄OH und gegebenenfalls Harnstoff.

Nach der Alterung haben alle Mikrokugeln eine sehr enge Durchmesserverteilung. Die gleichmäßige Schrumpfung der Mikrokugeln setzt sich auch beim Waschen fort und führt zu Mikrokugeln von enger Durchmesserverteilung nach dem Waschen.

Erfolgt kein Austausch, so findet außer einem gewissen Ammuniakverlust, bedingt durch Erwärmung, in dem ammoniakalischen Alterungswasser kein weiterer Stoffaustausch statt.

Nachdem die Alterung durchgeführt ist, werden die Mikrokugeln von der Alterungsstrecke 18 einer weiteren Übergabeeinrichtung zugeführt, um einem Waschprozess unverzogen zu werden. Dabei kann die Übergabeeinrichtung eine Konstruktion aufweisen, die dem Separator 10 entspricht. Somit wird das abgekühlte Alterungswasser unterhalb des Lochsiebes ablaufen und gesammelt. Anschließend erfolgt eine Aufkonzentrierung mit Ammoniakgas, die die Gelmikrokugeln nach der Abtrennung vom ammoniakalischen Fällbad haben, und eine Rückführung in die Alterungsstrecke 18.

Die gealterten Mikrokugeln bestehen aus unlöslichem Ammoniumdiuranat (ADU) und Polyvinylalkohol (PVA) - Addukt mit den wasserlöslichen Stoffen Ammoniumnitrat, THFA und Harnstoff, sofern diese Zusatzstoffe in der Ausgangslösung vorhanden sind. Zum Entfernten dieser wasserlöslichen Stoffe wird erfindungsgemäß ein mehrstufiger Koskadenwäscher verwendet, der den kontinuierlichen technischen Betrieb für einen mehrstufigen Waschprozess sicherstellt.

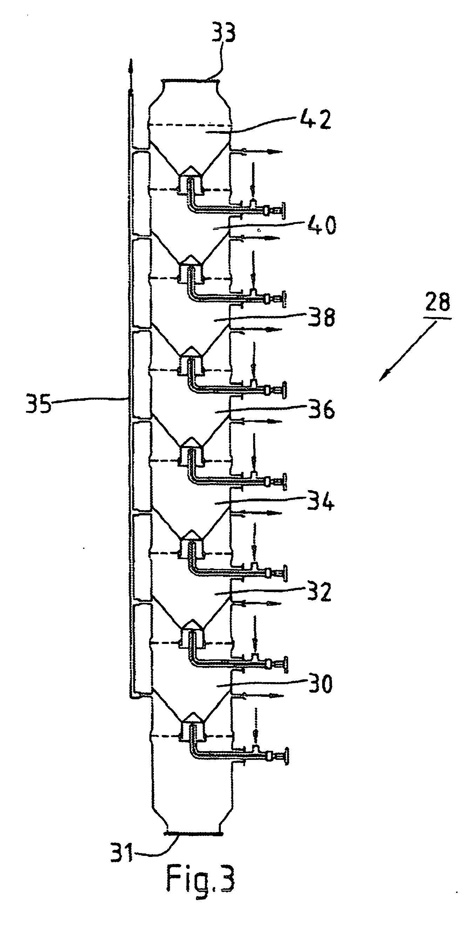

Ein entsprechender Waschturm 28 ist der Fig. 3 zu entnehmen. Der Waschturm 28 besteht im Ausführungsbeispiel aus 7 Kaskaden 30, 32, 34, 36, 38, 40, 42. Jede Kaskade 30, 32, 34, 36, 38, 40, 42 ist in einem der Waschkreisläufe eingebunden, in denen die Mikrokugeln nach und nach, d. h. von Stufe zu Stufe letztendlich nahezu frei von Ammoniumnitrat, THFA und Harnstoff gewaschen werden. Als Waschflüssigkeit wird schwach ammoniakalisches, etwa zweimolares Reinstwasser verwendet, das über eine Öffnung 31 im Boden des Waschturms 28 eingeführt und durch die Kaskaden 30, 32, 34, 36, 38, 40, 42 strömt, um über eine im Kopfbereich vorhandene Öffnung 33 abgeleitet zu werden. Dabei ändert sich die Zusammensetzung der Waschflüssigkeit von Stufe zu Stufe aufgrund des Stoffaustauschs zwischen der Waschflüssigkeit und den Kugeln.

Des Weiteren ergibt sich aus der Fig. 3, dass die einzelnen Stufen einschließlich der Bereiche des Waschturms 28, über den die Waschflüssigkeit zugeführt wird, mit einer Belüftungsleitung 35 verbunden sind.

Die gealterten Mikrokugeln fallen aus dem zweiten Separator, d. h. aus dessen Rohr, das dem Rohr 16 gemäß Fig. 1 entspricht, in die oberste bzw. die erste Waschstufe, also Kaskade 42 des Kaskadenwäschers und werden dort gewaschen, durchlaufen danach alle weiteren Waschstufen und werden in der letzten Waschstufe mit dem über die Öffnung 31 zugeführten schwach ammonikalischern etwa zweimolarem Reinstwassser bis zu einem ausreichend niedrigem Ammoniumnitratgehalt gewaschen.

Ammoniakalisches Wasser wird benötigt, um eine Hydrolyse von gefällten Produkten zu vermeiden.

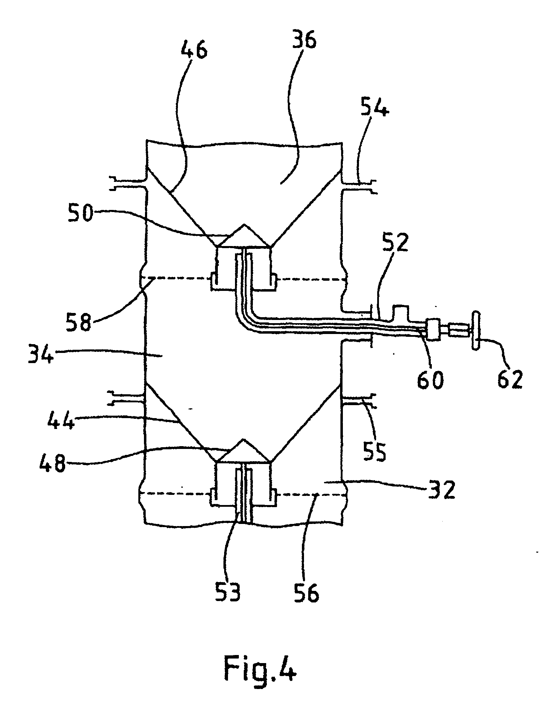

In Fig. 4 sind rein beispielhaft drei aufeinander folgende Kaskaden- oder Waschstufen 32, 34, 36 dargestellt. Jede Kaskade 32, 34, 36 weist bodenseitig einen Trichter 44, 46 auf, damit die Mikrokugeln von Stufe zu Stufe fallen können. Bodenseitig ist der jeweilige Trichter 44, 46 durch eine Ringspaltdüse mit Düsenteller 48, 50 im gewünschten Umfang verschließbar. Ferner weist jede Kaskade eine Leitung 52, 53 auf, über die das in der jeweiligen Stufe im Kreislauf geführte Waschwasser zuführbar ist. Auch ist im Kopfbereich einer jeden Kaskade 32, 34, 36 eine Flüssigkeitsausuittsöffnung 54, 55 vorhanden. Dabei ist die Ausnittsötfnung 54 der in der Fig. 4 mittleren Kaskade 36 mit der nachfolgenden, also unteren Kaskade 37 verbunden, um so den Innenraum im Kreislauf durchspülen zu können. Jeder Trichter 44, 46 begrenzt zwei Waschräume. Ursächlich hierfür ist, dass die Schnittstelle zwischen den einzelnen Kaskaden 32, 34, 36 zwischen den Trichtern 44, 46 verläuft. Die entsprechenden Schnittstellen sind mit den Bezugszeichen 56, 58 gekennzeichnet. Ferner ist eine nicht dargestellte Pumpe mit Mess- und Regelorgan vorhanden, die jedem Waschraum zugeordnet und mit den Anschlüssen 52, 53 verbunden sind. Der Kreislauf für die Kaskade 34 bzw. der von dieser begrenzte Waschraum schließt folglich die Leitung 53 sowie den Auslass 54 ein, die über eine eine Pumpe aufweisende und außerhalb des Waschturms 28 verlaufende Leitung verbunden sind.

Die in der Waschstufe vorhandenen Mikrokugeln werden durch das Waschwasser im erforderlichen Umfang in Schwebe gehalten, das mit Hilfe der angesprochenen Kreislaufpumpe ständig umgepumpt wird. Die Strömungsgeschwindigkeit des Waschwassers irn Ringspalt des Trichters 44, 46 wird mit Hilfe des Düsentellers 48, 50 eingestellt, der jeweils über eine biegsame Welle 60 z. B. mit einem Handrad 62 von außen in der Höhe verstellt werden kann. Die Ringspaltdüse ist so ausgeführt, dass das Waschwasser rundum gegen die Wandung des Trichters 44, 46 nach oben strömt. Nach Anheben des Düsentellers 48, 50 wird der Ringspalt erweitert und die Strömungsgeschwindigkeit im Spalt verringert und umgekehrt.

Durch die Einstellung der Ringspaltdüse wird folglich die Sinkgeschwindigkeit der Mikrokugeln und damit das Durchlaufen der einzelnen Kaskaden durch die Trichter 44, 46 vorgegeben.

Wie sich aus der Fig. 4 ergibt, verläuft die biegsame Welle 60 innerhalb der Waschwasserzuführleitung 52.

Im Ausführungsbeispiel besteht folglich der siebenstufige Kaskadenwäscher 28 aus sieben Kreisläufen unterschiedlicher Waschwasser-Konzentrationen mit sieben Kreislaufpumpen sowie einer Dosierpumpe für das schwach ammonikalische etwa zweimolare Reinstwassser, das über die Öffnung 31 zugeführt wird.

Erfindungsgemäß kann der Kaskadenwäscher 28 aus Glasteilen zusammengesetzt sein, wobei die Düsenteller 48, 50 mit der jeweiligen biegsamen Welle 60 aus Edelstahl gefertigt sein sollten. Der Kaskadenwäscher 28 kann selbstverständlich auch komplett aus Edelstahl bestehen. Hierdurch würde sich die Einstellung der Ringspalte erleichtern bzw. präziser vornehmen lassen.

Nach dem Waschen der Mikrokugeln werden diese zumindest zwei Wärmebehandlungen unterzogen, von denen eine ein Trocknen der Mikrokugeln und die andere ein Kalzinieren bewirkt. Dabei ist vorzugsweise ein Banddurchlaufofen vorgesehen, der unterschiedlich ausgestaltet sein kann.

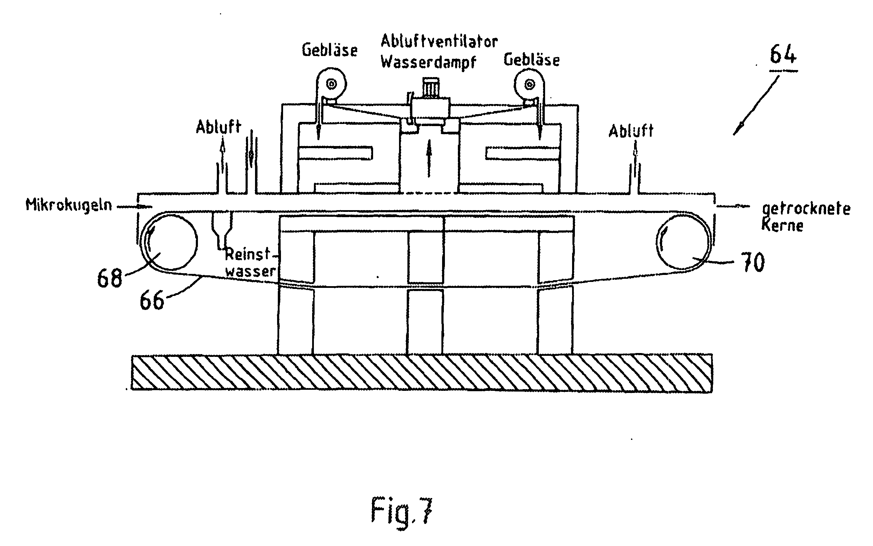

So erfolgt das Trocknen der gewaschenen Mikrokugeln nach dem Ausführungsbeispiel der Fig. 7 in einem Banddurchlaufofen 64. Dies kann mit Luft bei einer Temperatur bis zu 120 °C durchgeführt werden. Hierzu werden die Mikrokugeln auf einem endlosen Transportband 66 aus Siebgewebe durch den Ofen 64 bis zum Ofenausgang gefördert. Die Umlenkung des Transportbandes 66 erfolgt über Walzen 68, 70, die genaue Ausrichtung mit Hilfe einer lichtoptisch gesteuerten Walze.

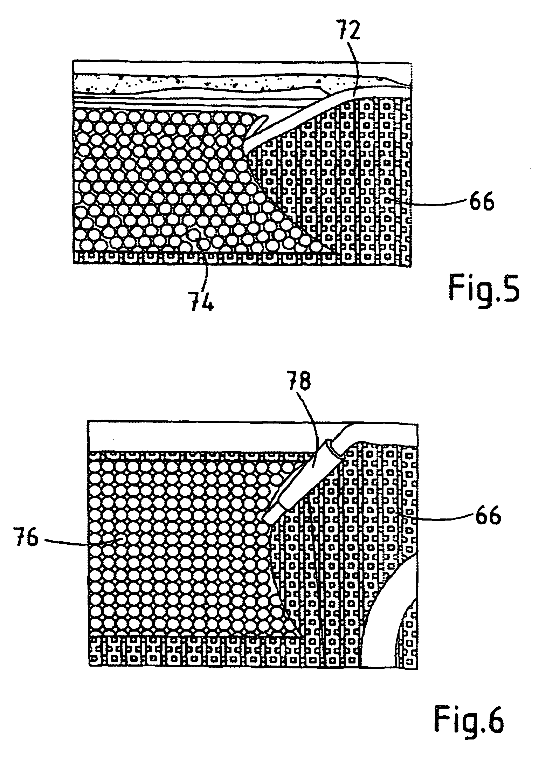

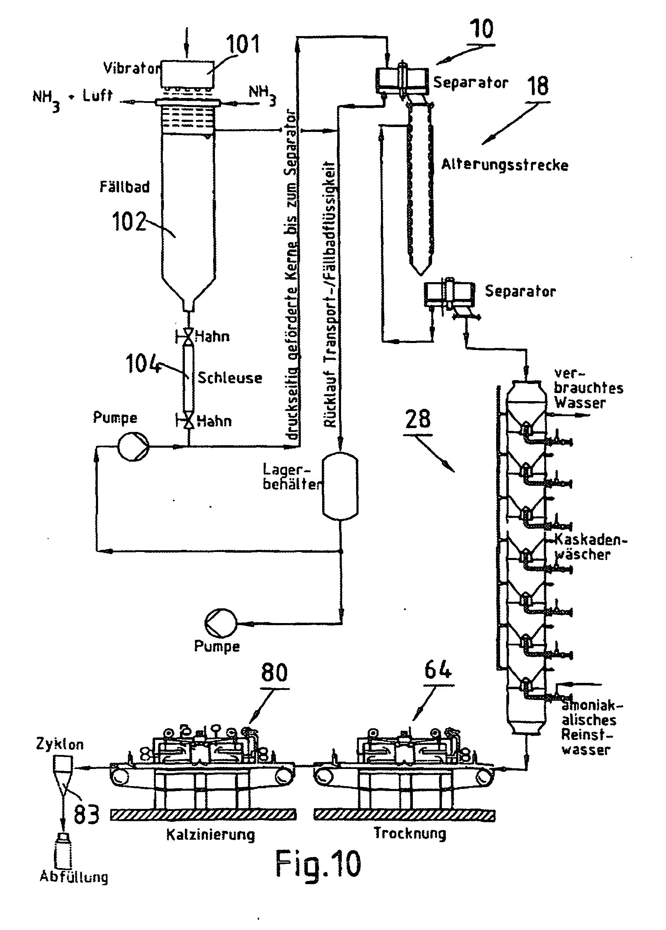

In der zeichnerischen Darstellung werden die gewaschenen Mikrokugeln der letzten Waschstufe des Kaskadenwäschers 28 zusammen mit dem ammoniakalischen Reinstwasser mit Hilfe einer Dosiervorrichtung z. B. einem Aufgaberüssel 72 (Fig. 5) transportiert, der sich über dem laufenden Transportband 66 zwangsgesteuert hin und her bewegt und die Mikrokugeln 74 zusammen mit der Transportflüssigkeit gleichmäßig auf dem Band 66 verteilt. Das Reinstwasser fließt durch das Siebgewebe ab und wird gesammelt. Die nassen Mikrokugeln 74 werden auf dem Transportband 66 durch den Ofen 64 gefördert und darin getrocknet. Am Ofenausgang können die getrockneten Kerne 76 mit einem gesteuerten beweglichen Absaugrüssel 78 bei geringem Unterdruck von dem Siebgewebe, also dem Transportband 66 abgesaugt werden, in einem Zyklon 83 (Fig. 10) abgeschieden und in einem Vorratsbehälter gesammelt werden.

Um ein Verkleben der nassen Mikrokugeln 74 beim Trocknen zu vermeiden, kann dem ammoniakalischen Reinstwasser eine kleine Menge an wasserlöslichem Fettalkohol, z. B. 0,5 g Lutensol A8 je Liter Reinstwasser, oder ein anderes Detergens zugesetzt werden.

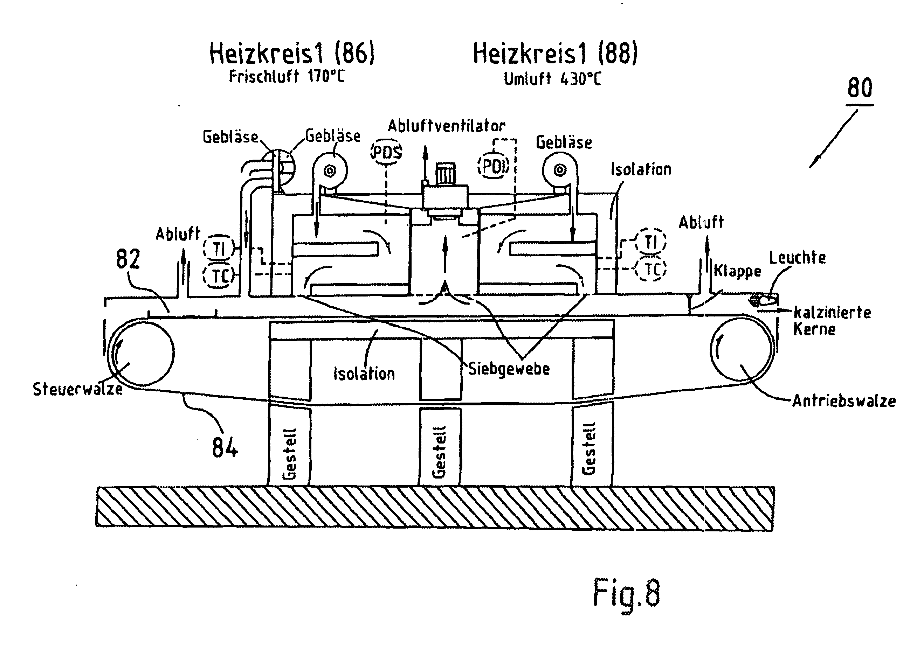

Die getrockneten Kerne werden sodann in einem weiteren Banddurchlaufofen 80 (Fig. 8) an Luft bis 430 °C kalziniert, wobei ADU und PVA thermisch zersetzt werden unter Bildung von UO₃-Kermen, während NH₃, CO₂ und Wasserdampf als Bestandteile der Abluft abgegeben werden.

Erfindungsgemäß erfolgt das Kalzinieren auf Metallschalen 82, die über ein Transportband 84 durch den Ofen 80 gefördert werden können. Das Transportband 84 kann gleichfalls ein Siebgewebe aufweisen. Erfindungsgemäß erfolgt das Kalzinieren auf den Metallschalen 82 in Monolage, d. h., die Kerne liegen nur nebeneinander und nicht übereinander, um einen sehr guten Wärmeübergang bei den auftretenden exothermen Reaktionen zu gewährleisten. Die Verteilung der getrockneten Kerne auf den Metallschalen 82 erfolgt mit einer Dosiervorrichtung insbesondere unter Verwendung eines Aufgaberüssels, durch den die genaue Menge an Kernen für die Ausbildung der Monolage festgelegt wird, sowie durch leichtes Rütteln der Schale 82, wodurch die Mikrokugeln alle freien Plätze auf der Schale 82 belegen. Die Metallschalen 82 haben einen gelochten Boden.

Dabei ist die Maschenweite derart, dass diese grundsätzlich kleiner ist als die Mikrokugeln im jeweiligen Herstellungsschritt sind.

Nach dem Kalzinieren werden die Kerne erfindungsgemäß mit Hilfe eines beweglichen Absaugrüssels bei geringem Unterdruck von den Schalen 82 entfernt, in einem Zyklon 83 (Fig. 10) abgeschieden und in einem Vorratsbehälter gesammelt. Insoweit wird auf die Erläuterungen zu den Fig. 5 und 6 verwiesen.

Die Metallschalen 82 sind bevorzugterweise fest auf dem Transportband 84 montiert und bestehen vorzugsweise aus wärmebeständigem Stahl wie Thermax oder Inconel.

Wie sich aus der Fig. 8 ergibt, weist der Banddurchlaufofen zwei Heizkreise 86, 88 auf. Der erste Heizkreis 86 wird mit Frischluft bei etwa 170 °C und der zweite Heizkreis im Umluftbetrieb bei etwa 430 °C betrieben.

Beispielhaft ist anzugeben, dass der Kanal, in dem die getrockneten Kerne den Heizkreisen ausgesetzt sind, eine Länge von 3,25 m, eine Breite von 0.32 m und eine Höhe von 80 mm aufweisen kann. Die Metallschalen 82 können eine Größe von 300 x 350 mm² bei einer Höhe von 10 mm aufweisen.

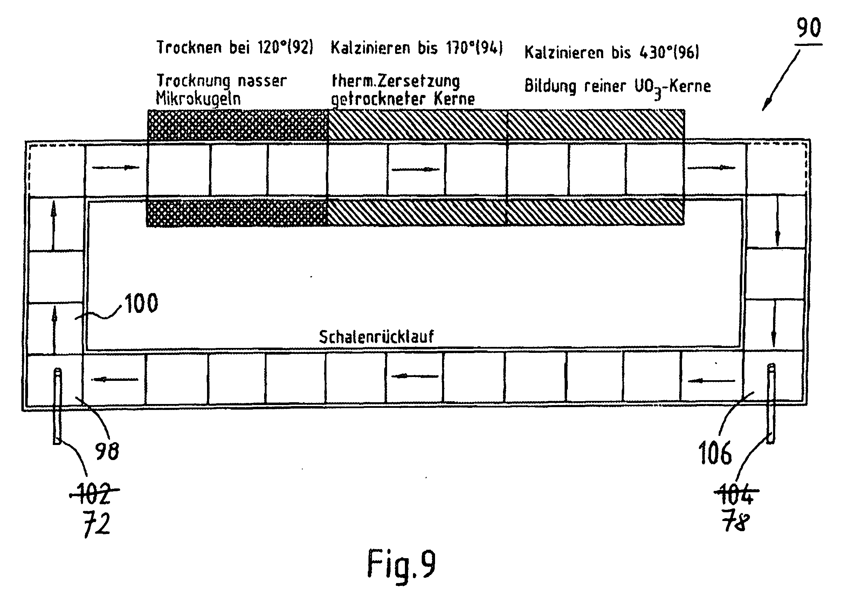

Wie sich aus der Fig. 9 rein prinzipiell ergibt, kann der Trocknungs- und Kalzinierungsprozess auch in einem Banddurchlaufofen 90 bei Luft in den Temperaturbereichen 120 °C, 170 °C und 430 °C durchgeführt werden, wobei in der ersten Stufe 92 (bis zu 120 °C) die nassen Mikrokugeln getrocknet werden, in der zweiten Stufe 94 (Kalzinieren bis 170 °C) die thermische Zersetzung der in Monolage vorliegenden getrockneten Kerne stattfindet und in der dritten Stufe 96 (Kalzinieren bis 430 °C) die Bildung von reinen UO₃-Kernen erreicht wird.

Bei dem Ausführungsbeispiel der Fig. 9 besteht das Transportband des Ofens 90 aus gelochten Metallschalen 98, 100, 106 mit einem Siebdurchmesser von z. B. 300 µm bis 500 µm, die von einem Antriebssystem durch den Ofen 90 gezogen und als unendliches Band zurückgeführt werden. Erfindungsgemäß wird eine bestimmte Menge gewaschener Mikrokugeln mit dem Reinstwasser der letzten Waschstufe des Kaskadenwäschers 28 mit Hilfe eines Aufgaberüssels 72 gleichmäßig auf die erste gelochte Metallschale 98 verteilt. Die Transportflüssigkeit fließt durch die Öffnungen der Metallschalen 98 ab. Im Ausführungsbeispiel ist die Anordnung der in einem geschlossenen Kreis geführten Metallschalen 98, 100 derart gewählt, dass ein Abfließen über fünf Schalenpositionen ermöglicht wird. Die nassen Kerne gelangen auf den gelochten Metallschalen in den Trockenraum des Banddurchlaufofens 90 und werden dort in der ersten Stufe 92 bei Temperaturen bis 120 °C getrocknet. Durch leichtes Rütteln der Schale 98. 100 bilden die getrockneten Kerne eine Monolage von maximal der Menge der Mikrokugeln, die mit dem Waschwasser aufgegeben worden ist. Da die getrockneten Kerne einen Durchmesser von z. B. ca. 1 mm haben, werden sich die Löcher des Bodens der Metallschale füllen, der Rest wird sich gleichmäßig darum verteilen.

Die getrockneten Kerne werden anschließend in der zweiten und dritten Stufe 94 bzw. 96 bei Temperaturen bis in etwa 170°C bzw. bis in etwa 430 °C in derselben gelochten Metallschale bis zu einem Durchmesser von etwa 0.8 mm kalziniert. Danach werden die Schalen aus den Ofen 90 befördert und umgelenkt.

Die kalzinierten Kerne werden mit Hilfe eines bewegten Absaugrüssels 78 bei geringern Unterdruck von den gelochten Metallschalen 106 entfernt, in einem Zyklon abgeschieden und in einem Vorratsbehälter gesammelt.

Die entleerten und gelochten Metallschalen 106 laufen außerhalb des Ofens in die Aufgabeposition (Position der Schale 98) für gewaschene Mikrokugeln plus Transportflüssigkeit zurück und werden dort wieder beladen.

Der Boden jeder Metallschale 98, 100, 106 besteht aus einem ebenen Lochsieb, das nach einem speziellen Ätzverfahren hergestellt werden kann. Der Schalenrand weist eine Höhe von etwa 10 mm auf. Als Metall für die Schalen wird Edelstahl, Thermax oder Inconel verwendet.

Der Aufgaberüssel 72 für die nassen Mikrokugeln plus Transportflüssigkeit wird so gesteuert, dass die Metallschale gleichmäßig befüllt wird und die Menge an Mikrokugeln nicht größer ist als für die Ausbildung der Monolage von getrockneten Kernen erforderlich.

Die Umschaltung des Mikrokugelstroms auf die nächste Schale erfolgt synchron mit dem Wechsel der Schalen bei entsprechendem Zeitabstand.

In Fig. 10 ist noch einmal das erfindungsgemäße Herstellungsverfahren im Fließbild dargestellt. Über einen Vibrator 101 wird in bekannter Weise zum Beispiel Uranylnitrat-Lösung vertropft, die Tropfen werden in einer Ammoniakgasatmosphäre vorgehärtet, um sodann in einem Fällbad 102 aus wässriger Ammoniaklösung zu gelieren. Die Mikrokugeln werden über eine Schleuse 104 batchweise dem Separator 10 zugeführt, um sodann einer Alterung (Alterungsstrecke 18), einem Waschprozess (Kaskadenwäscher 28) sowie einer Trocknung und Kalzinierung (Durchlauföfen 64, 80) unterzogen zu werden, Wie dies zuvor erläutert worden ist. Dabei ist ein wesentliches Merkmal, dass der Zeitraum, innerhalb dem die Mikrokugeln mit der Fällbadflüssigkeit in Kontakt gelangen bis hin zum Kontakt mit der Alterungsflüssigkeit, für jede Mikrokugel gleich oder in etwa gleich ist, so dass die Konzentrationen der Bestandteile der Mikrokugeln gleich oder im Wesentlichen gleich sind. Die Kugeln weisen auch in Bezug auf ihre Durchmesser und Konzentrationen der Bestandteile nach der Alterungsstrecke 18 Unterschiede im Wesentlichen nicht auf, so dass sich im Endeffekt Brenn- bzw. Brutstoffkerne mit Durchmessern ergeben, die nur eine geringe Streuung aufweisen.

Dabei werden in der Alterungsstufe Gleichgewichtsbedingungen derart eingestellt, dass die Konzentration der Bestandteile in den einzelnen Mikrokugeln in Bezug auf Ammoniumnitrat bzw. den Hilfsstoffen gleich oder im Wesentlichen gleich ist, wobei selbstverständlich die Konzentrationen der Komponenten selbst voneinander abweichen können.

Durch den Kaskadenwäscher 28 wird sichergestellt, dass die über einen in dem Separator 10 entsprechenden Separator von der Alterungsstrecke an den Kaskadenwäscher 28 übergebenen Mikrokugeln nahezu frei von Ammoniumnitrat und Hilfsstoffen wie THFA und Harnstoff sind. Durch das in Monolage erfolgende Kalzinieren der getrockneten Mikrokugeln wird gleichfalls sichergestellt, dass im erforderlichen Umfang ein gleichmäßiges Schrumpfen erfolgt.

## Patentansprüche

1. Verfahren zur Herstellung kugelförmiger Brenn- und/oder Brutstoffkerne einer Größe vorzugweise im Bereich zwischen 300 µm und 800 µm, insbesondere zur Herstellung von Kernen aus Uranoxid und/oder Urancarbid und/oder einem uranhaltigen Mischoxid und/oder Mischcarbid, durch Vertropfen einer Uranylnitrat sowie einen oder mehrere Hilfsstoffe wie Harnstoff, Tetrahydrofurylalkohol (THFA) und/oder Polyvinylalkohol (PVA) enthaltenden Lösung in ein ammoniakalisches Fällbad (102) zur Bildung von Mikrokugeln. Altern und Waschen so hergestellter Mikrokugeln in einer Ammoniaklösung, Trocknen sowie thermisches Behandeln,
**dadurch gekennzeichnet,**
**dass** die Mikrokugeln (74) aus dem Fällbad über einen ersten Separator (10) abgetrennt und zum Altern dem ammoniakalischen Alterungswasser zugeführt werden, dass Kontaktzeildauer der Mikrokugeln mit Flüssigkeit des Fällbads (102) vor Einbringung in das Atterungswasser gleich oder im Wesentlichen gleich eingestellt wird, dass die Mikrokugeln über eine Übergabeeinrichtung von dem Alterungswasser an einen mehrstufigen Kaskadenwäscher (28) übergeben werden, in dem die Mikrokugeln frei oder im Wesentlichen frei von Ammoniumnitrat und zumindest einem in den Mikrokugeln enthaltenen Hilfsstoff gewaschen werden, und dass nach dem Trocknen der Mikrokugeln diese während einer thermischen Behandlung in Monolage verteilt kalziniert werden.

2. Verfahren nach Anspruch 1,
**dadurch gekennzeichnet,**
**dass** die gleiche oder im Wesentlichen gleiche Zeitdauer zwischen der Entstehung der Mikrokugeln (74) im Fällbad (102) und Zuführung zu dem Alterungswasser mittels des ersten Separators (10) eingestelit wird.

3. Verfahren nach Anspruch 1 oder 2,
**dadurch gekennzeichnet,**
**dass** das ammoniakalische Alterungswasser auf Gleichgewichtsbedingungen derart eingestellt wird, dass jede oder im Wesentlichen jede Mikrokugel (74) in Bezug auf Komponenten jeweils für sich eine gleiche oder im Wesentlichen gleiche Konzentration aufweist, wobei vorzugsweise zumindest in Bezug auf in den Mikrokugeln (74) enthaltenen Ammoniumnitrat und/oder Harnstoff und/oder vorhandenen THFA Gleichgewichtsbedingungen eingestellt werden.

4. Verfahren nach Anspruch 3,
**dadurch gekennzeichnet,**
**dass** nach Entnahme der Mikrokugeln aus dem Alterungswasser die Konzentration von zumindest THFA und/oder die Konzentration von NH₄NO₃, NH₄OH und - sofern Harnstoff enthalten - von Harnstoff in den Mikrokugeln der oder in etwa der im Alterungswasser entspricht.

5. Verfahren nach einem der Ansprüche 1 bis 4,
**dadurch gekennzeichnet,**
**dass** in dem ammoniakalischen Alterungswasser Bedingungen eingestellt werden, die einen Austausch von maximal 15 Gew.-%, insbesondere von 10 bis 15 Gew.-% von THFA mit H₂O ermöglichen.

6. Verfahren nach einem der vorhergehenden Ansprüche,
**dadurch gekennzeichnet,**
**dass** die Mikrokugeln (74) in das auf Raumtemperatur eingestellte ammonikalische Alterungswasser übergeben werden, das sodann auf eine Temperatur T1 mit 60 °C ≤ T1 ≤ 80 °C aufgeheizt wird, dass die Mikrokugeln über eine Zeit t mit 50 min ≤ t ≤ 70 min bei der Temperatur T1 in dem Alterungswasser verbleiben und dass nach der Zeit t das Alterungswasser auf Raumtemperatur abgekühlt und sodann die Mikrokugeln entnommen werden, wobei insbesondere das Erwärmen und Abkühlen des Alterungswassers mittels zumindest eines Wärmetauschers durchgeführt wird.

7. Verfahren nach Anspruch 1,
**dadurch gekennzeichnet,**
**dass** die Mikrokugeln (74) in dem Kaskadenwäscher (28) durch mehrere Waschstufen geleitet werden, wobei insbesondere die Sinkgeschwindigkeit der Mikrokugeln in jeder Waschstufe durch in dieser im Kreislauf strömendes Waschwasser eingestellt wird, das der Waschstufe (30, 32, 34, 36, 38, 40, 42) vorzugsweise über einen im Boden eines Trichters (44, 46) vorhandenen abstandsveränderbaren Ringspalt zugeführt wird.

8. Verfahren nach Anspruch 7,
**dadurch gekennzeichnet,**
**dass** neben den im Kreislauf in jeder Waschstufe (30, 32, 34, 36, 38, 40, 42) geführten Waschwasser durch sämtliche Kaskaden von der untersten beginnend Waschwasser geführt wird, wobei vorzugsweise als der untersten Kaskade (30) zugeführtes Waschwasser schwach ammoniakalisches Reinstwasser oder zweimolares ammoniakalisches Reinstwasser verwendet wird.

9. Verfahren nach Anspruch 1,
**dadurch gekennzeichnet,**
**dass** die gewaschenen Mikrokugeln (74) in einem Banddurchlaufofen vorzugsweise bei einer Temperatur T₂ mit D₂ ≤ 120 °C, insbesondere 100 °C ≤ T₂ ≤ 120 °C getrocknet werden, wobei insbesondere die gewaschenen Mikrokugeln (74) mit Waschwasser über eine Aufgabeeinrichtung wie Aufgaberüssel (72) gleichmäßig verteilt auf ein durch den Banddurchlaufofen gefördertes Förderelement (66) wie Siebband aufgegeben werden, wobei gegebenenfalls dem Waschwasser vor Aufgabe auf das Förderelement ein Detergens wie wasserlöslicher Fettalkohol zugesetzt wird.

10. Verfahren nach Anspruch 9,
**dadurch gekennzeichnet,**
**dass** die getrockneten Mikrokugeln (Kerne) (76) nach dem Durchlaufen des Banddurchlaufofens (64, 80) mittels einer Absaugeiruichtung wie Absaugrüssel (78) von einer die Mikrokugeln fördemden Fördereinrichtung (66) entfernt, in einem Zyklon abgeschieden und in einem vorratsbehälter gesammelt werden.

11. Verfahren nach Anspruch 1,
**dadurch gekennzeichnet,**
**dass** die Mikrokugeln (74) in der Monolage in durch einen Durchlaufofen (64, 80) geförderte bodenseitig Öffnungen aufweisenden Metallschalen (82, 106) gefördert und bei einer Temperatur T3 mit T3 ≤ 450 °C, insbesondere 160 °C ≤ T3 ≤ 430 °C, vorzugsweise in zwei Stufen kalziniert werden, wobei insbesondere die Mikrokugeln (74) in dem Banddurchlautofen (64, 80) mehrere Heizzonen (92, 94, 96) mit zumindest einer Trockenzone und zumindest einer Kalzinierzone durchlaufen und vorzugsweise das Trocknen und/oder Kalzinieren im Umluftbetrieb durchgeführt wird, und wobei insbesondere die kalzinierten Kerne (76) von der Metallschale (82, 106) abgesaugt werden und gegebenenfalls die abgesaugten Kerne (76) in einem Zyklon (83) abgeschieden und in einem Vorratsbehälter gesammelt werden.

12. Anordnung zur Herstellung von kugelförmigen Brenn- und/oder Brutstoffelementen, umfassend ein Fällbad (102), eine Alterungsstrecke (18), eine Wascheinrichtung (28) und eine Wärmebehandlungseinrichtung (64, 80, 90) sowie Übergabeeinrichtungen (10) für während der Herstellung hergestellte Mikrokugeln (74) und aus diesen gebildete Kerne (76),
**dadurch gekennzeichnet,**
**dass** zwischen dem Fällbad und der Alterungsstrecke (18) eine erste Übergabeeinrichtung in Form eines Separators (10) angeordnet ist, der einen in Sektoren unterteilten über ein einen Ausschnitt aufweisendes Lochsieb (12) als Boden drehbaren Zylinder (14) aufweist, wobei nacheinander jeder Sektor in einer bodenseitig von dem Lochsieb abgedeckten ersten Position auf die Austrittsöffnung des Fällbades (102) ausgerichtet und nach Drehen des Zylinders um einen Winkel α in einer zweiten Position auf den Ausschnitt des Lochsiebs ausgerichtet ist, der mit der Alterungsstrecke (18) in Verbindung steht, dass jeder Sektor eine gleiche Fläche aufweist und dass der Winkel α beträgt α / n mit n = Anzahl der Sektoren.

13. Anordnung nach Anspruch 12,
**dadurch gekennzeichnet,**
**dass** der vorzugsweise aus Metall bestehende Zylinder (14) dicht auf dem Lochsieb (12) aufsitzt, das vorzugsweise aus Edelstahl besteht und eine Maschenweite d mit 300 µm ≤ d ≤ 500 µm aufweist, wobei insbesondere der Zylinder (14) in n-Sektoren mit n ≥ 3, insbesondere n = 6 unterteilt ist.

14. Anordnung nach Anspruch 12 oder Anspruch 13,
**dadurch gekennzeichnet,**
**dass** die Alterungsstrecke (18) einen von einem Siebgewebe oder einem Lochblech (22) umgebenen die Mikrokugeln aufnehmenden Hohlzylinder umfasst, der zum Alterungswassertransport beabstandet von einem Gehäuse (20) umgeben ist, wobei insbesondere die Alterungsflüssigkeit in einem zumindest einen Wärmetauscher enthaltenden Kreislauf strömt, in dem das Gehäuse (20) integriert ist und/oder die Alterungsstrecke (18) mit einer als zweiter Separator ausgebildeten die Alterungsstrecke transportmäßig mit der Wascheinrichtung (28) verbindenden zweiten Übergabeeinrichtung verbunden ist, wobei vorzugsweise der zweite Separator einen dem ersten Separator (10) entsprechenden Aufbau aufweist.

15. Anordnung nach einem der Ansprüche 12 bis 14,
**dadurch gekennzeichnet,**
**dass** die Wascheinrichtung (28) ein Kaskadenwäscher mit m-Waschstufen ist, wobei m ≥ 2, insbesondere 2 ≤ m ≤ 8, bevorzugterweise m = 7 ist, wobei vorzugsweise jede Waschstufe bodenseitig einen Trichter (44, 46) mit einer Öffnung aufweist, die über eine Absperreinrichtung (48, 50) mit Düsenteller im gewünschten Umfang verschließbar ist, vorzugsweise ein Waschwasser führender Kreislauf mit einem Abschnitt wie Leitung (52) unterhalb der Absperreinrichtung (48, 50) endet, wobei gegebenenfalls innerhalb des Abschnitts bzw. der Leitung (52) ein Stellelement wie biegsame Welle (60) verläuft, die mit der Absperreinrichtung (48, 50) verbunden ist.

16. Anordnung nach einem der Ansprüche 12 bis 15,
**dadurch gekennzeichnet,**
**dass** die gewaschenen Mikrokugeln (74) mittels einer Transporteinrichtung wie einem endlosen Transportband (66) durch den Durchlaufofen (64, 80) förderbar sind, wobei das Transportband zumindest abschnittsweise ein Siebgewebe aufweist oder dass die Mikrokugeln (74) über eine aus aneinander gereihten Metallschalen (82) bestehende Transporteinrichtung durch den Durchlaufofen (80, 90) förderbar sind, wobei jede Metallschale einen gelochten Boden mit einer Maschenweite im Bereich zwischen 300 µm und 500 µm aufweist, wobei vorzugsweise die Mikrokugeln (74) über eine Aufgabeeinrichtung wie Aufgaberüssel (72) auf die Transporteinrichtung wie das Transportband (66) oder die Metallschalen (82) aufgebbar sind und/oder getrocknete bzw. kalzinierte Mikrokugeln (76) von der Transporteinrichtung mittels Unterdruck wie mit einem Absaugrüssel (78) absaugbar sind, wobei gegebenenfalls die getrockneten bzw. kalzinierten Mikrokugeln (76) vorzugsweise über einen Zyklon (83) abscheidbar und in einem Vorratsbehälter sammelbar sind.

## Claims

1. Method for producing spherical fuel and/or breeder material cores having a size preferably in the range between 300 µm and 800 µm, particularly for producing cores made of uranium oxide and/or uranium carbide and/or a uranium containing mixed oxide and/or mixed carbide, by dripping a solution containing a uranyl nitrate as well as one or more auxiliary agents, such as, urea, tetrahydrofurfuryl alcohol (THFA) and/or polyvinyl alcohol (PVA) in an ammoniacal precipitation bath (102) for the formation of microspheres, aging and washing of microspheres so produced in an ammonia solution, drying as well as a thermal treatment,
**characterized in**
**that** the microspheres (74) are separated from the precipitation bath via a first separator (10), and, for aging, led to the ammoniacal aging water, that the contact duration of the microspheres with liquid of the precipitation bath (102) prior to introduction into the aging water is set equally or substantially equally, that the microspheres are transferred via a transfer device from the aging water to a multistage cascade scrubber (28), in which the microspheres are washed until they are free or substantially free of ammonium nitrate and at least one auxiliary agent contained in the microspheres, and in that after the drying of the microspheres, the latter are calcined, distributed in a monolayer, during a thermal treatment.

2. Method according to claim 1,
**characterized in**
**that** the same or substantially the same duration is set between the formation of the microspheres (74) in the precipitation bath (102) and the supplying to the aging water by means of the first separator (10).

3. Method according to claim 1 or 2,
**characterized in**
**that** the ammoniacal aging water is set to equilibrium conditions in such a way that every or substantially every microsphere (74), with respect to components, in each case presents the same or substantially the same concentration, whereby equilibrium conditions are set preferably at least with respect to ammonium nitrate and/or urea and/or THFA contained in the microspheres (74).

4. Method according to claim 3,
**characterized in**
**that** after the removal of the microspheres from the aging water, the concentration of at least THFA and/or the concentration of NH₄NO₃, NH₄OH and - if the content includes urea - of urea in the microspheres corresponds to or approximately to the one in the aging water.

5. Method according to one of claims 1 to 4,
**characterized in**
**that** in the ammoniacal aging water, conditions are set which allow an exchange of at most 15 wt %, particularly 10-15 wt % THFA, with H₂O.

6. Method according to one of the preceding claims,
**characterized in**
**that** the microspheres (74) are transferred into the ammoniacal aging water set to room temperature, which is heated subsequently to a temperature T1 with 60°C ≤ T1 ≤ 80°C is carried out, that the microspheres remain for a time t with 50 min ≤ t ≤ 70 min at the temperature T1 in the aging water, and that, after the time t, the aging water is cooled to room temperature, and the microspheres are then removed, whereby especially the heating and cooling of the aging water is carried out by means of at least one heat exchanger.

7. Method according to claim 1,
**characterized in**
**that** the microspheres (74) are led in the cascade scrubber (28) through several wash stages, whereby especially the sinking speed of the microspheres in each wash stage is set by washing water which flows in the circulation in it, which is supplied to the wash stage (30, 32, 34, 36, 38, 40, 42) preferably via an annular gap, with adjustable separation, which is present in the bottom of a funnel (44, 46).

8. Method according to claim 7,
**characterized in**
**that** besides the washing water which is led in circulation in each wash stage (30, 32, 34, 36, 38, 40, 42), washing water is led through all the cascades starting from the bottommost cascade whereby preferably as washing water supplied to the bottommost cascade (30) weakly ammoniacal ultrapure water or two molar ammoniacal ultrapure water is used.

9. Method according to claim 1,
**characterized in**
**that** the washed microspheres (74) are dried in a continuous belt furnace, preferably at a temperature T2 with T2 ≤ 120°C., particularly 100°C ≤ T2 ≤ 120°C, whereby especially the washed microspheres (74) are evenly distributed with washing water via a feed device, such as a supply nozzle (72), on a conveyor element (66), such as strainer belt, conveyed through the continuous belt furnace, whereby possibly a detergent, such as water-soluble fatty alcohol, is added to the washing water before the supplying on the conveyor element (74).

10. Method according to claim 9,
**characterized in**
**that** the dried microspheres (cores) (76), after passing through the continuous belt furnace (64, 80), are removed by means of an aspiration device, such as aspiration nozzle (78), from a conveyor device (66) conveying the microspheres, are separated in a cyclone, and are collected in a reservoir.

11. Method according to claim 1,
**characterized in**
**that** the microspheres (74), in the monolayer, are conveyed in metal shells (82, 106) which present openings on the bottom side and are conveyed through a continuous furnace (64, 80), and calcined at a temperature T3 with T3 ≤ 450°C., particularly 160°C ≤ T3 ≤ 430°C, preferably in two steps, whereby especially the microspheres (74), in the continuous belt furnace (64, 80), pass through several heating zones (92, 94, 96) with at least one drying zone and at least one calcination zone and preferably the drying and/or calcination are carried out in circulating air operation and whereby especially the calcined cores (76) are aspired from the metal shell (82, 106) and possibly the aspired cores (76) are separated in a cyclone (83), and collected in a reservoir.

12. Arrangement for producing spherical fuel elements and/or breeder material elements, comprising a precipitation bath (102), an aging section (18), a washing device (28), and a thermal treatment device (64, 80, 90) as well as transfer devices (10) for microspheres (74) produced during the manufacture, and cores (76) formed therefrom,
**characterized in**
**that**, between the precipitation bath and the aging section (18), a first transfer device in the form of a separator (10) is arranged, which comprises a cylinder (14), which is subdivided into sectors, and which can be rotated over a perforated strainer (12) as bottom which presents a cutout, whereby, successively, each sector is aligned, in a first position which is covered on the bottom side by the perforated strainer, with the outlet opening of the precipitation bath (102), and, after turning the cylinder by an angle α, aligned, in a second position, with a cutout of the perforated strainer, which is in connection with the aging section (18), in that each sector presents an equal surface area, and that the angle α is α /n with n=number of sectors.

13. Arrangement according to claim 12,
**characterized in**
**that** the cylinder (14), preferably made of metal, sits tightly on the perforated strainer (12), preferably made from a stainless steel, and has a mesh width d with 300 µm ≤ d ≤ 500 µm, whereby especially the cylinder (14) is divided into n sectors with n ≥ 3, particularly n=6.

14. Arrangement according to claim 12 or claim 13,
**characterized in**
**that** the aging section (18) comprises a hollow cylinder which is enclosed by a strainer fabric or a perforated plate (22) and receives the microspheres, and which is enclosed by a housing (20), with separation from the aging water transport, whereby especially the aging liquid flows in a circulation which contains at least one heat exchanger, in which the housing (20) is integrated, and/or the aging section (18) is connected with a second transfer device, designed as second separator which connects the aging section in terms of transport to the washing device (28), whereby preferably the second separator presents a design corresponding to the first separator (10).

15. Arrangement according to one of claims 12 to 14,
**characterized in**
**that** the washing device (28) is a cascade scrubber with m wash stages, whereby m ≥ 2, particularly 2 ≤ m ≤ 8, preferably m=7, whereby preferably each wash stage, on the bottom side, presents a funnel (44, 46) with an opening which can be closed to the desired extent via a cutoff device (48, 50) with nozzle head, preferably a circulation through which washing water flows ends with a section such as line (52) beneath the cutoff device (48, 50), whereby possibly within the section or the line (52), a setting element extends, such as a bendable shaft (60), which is connected with the cutoff device (48, 50).

16. Arrangement according to one of claims 12 to 15,
**characterized in**
**that** the washed microspheres (74) can be conveyed by means of a transport device, such as an endless conveyor belt (66), through the continuous furnace (64, 80), whereby the conveyor belt presents at least in sections a strainer fabric, or that the microspheres (74) can be conveyed by means of a transport device consisting of metal shells (82) arranged in a row one after the other, through the continuous furnace (80, 90), whereby each metal shell comprises a perforated bottom with a mesh width in the range between 300 µm and 500 µm, whereby preferably the microspheres (74) can be supplied via a feed device, such as a supply nozzle (72), on the transport device, such as the conveyor belt (66) or the metal shells (82) and/or dried, respectively calcined microspheres (76) can be aspired from the transport device by negative pressure, for example, with an aspiration nozzle (78), whereby possibly the dried, respectively calcined microspheres (76) can be separated preferably via a cyclone (83), and collected in a reservoir.

## Revendications

1. Procédé destiné à fabriquer des noyaux de combustible et/ou de matière fertile de forme sphérique et d'une taille comprise de préférence dans la plage de 300 µm à 800 µm, en particulier à fabriquer des noyaux constitués d'oxyde d'uranium et/ou de carbure d'uranium et/ou d'un oxyde mixte et/ou carbure mixte contenant de l'uranium, par versement au goutte à goutte d'une solution contenant un nitrate uranique ainsi qu'un ou plusieurs agent(s) accessoire(s) tel(s) que l'urée, l'alcool tétrahydrofurfurylique (THFA) et/ou l'alcool polyvinylique (PVA), dans un bain de précipitation ammoniacal (102) pour la formation de microbilles, le vieillissement et le lavage des microbilles ainsi fabriquées dans une solution ammoniacale, le séchage et le traitement thermique,
**caractérisé en ce**
**que** les microbilles (74) sont séparées du bain de précipitation et amenées pour vieillissement dans la solution de vieillissement ammoniacale au moyen d'un premier séparateur (10), que la durée du contact des microbilles avec le liquide du bain de précipitation (102) avant l'introduction dans la solution de vieillissement est réglée de manière identique ou quasiment identique, que les microbilles sont transférées, par l'intermédiaire d'un dispositif de transfert, de la solution de vieillissement à un laveur à cascades à plusieurs étages (28), dans lequel les microbilles sont lavées pour éliminer ou quasiment éliminer le nitrate d'ammonium et au moins un agent accessoire contenus dans les microbilles, et qu'après le séchage des microbilles, celles-ci sont calcinées réparties en couche monomoléculaire pendant un traitement thermique.

2. Procédé selon la revendication 1,
**caractérisé en ce**
**que** la durée identique ou quasi identique entre la formation des microbilles (74) dans le bain de précipitation (102) et l'amenée dans la solution de vieillissement est réglée au moyen du premier séparateur (10).

3. Procédé selon la revendication 1 ou 2,
**caractérisé en ce**
**que** la solution de vieillissement ammoniacale est ajustée sur des conditions d'équilibre de telle sorte que chaque ou quasiment chaque microbille (74) présente pour elle-même dans ses composants une concentration identique ou quasiment identique, sachant que de préférence des conditions d'équilibre sont ajustées au moins en ce qui concerne le nitrate d'ammonium et/ou l'urée et/ou le THFA contenu(s) dans les microbilles (74).

4. Procédé selon la revendication 3,
**caractérisé en ce**
**qu'**après extraction des microbilles de la solution de vieillissement, la concentration au moins de THFA et/ou la concentration de NH₄NO₃, NH₄OH et - en présence d'urée - d'urée dans les microbilles correspond(ent) approximativement à celle(s) dans la solution de vieillissement.

5. Procédé selon l'une des revendications 1 à 4,
**caractérisé en ce**
**que** dans la solution de vieillissement ammoniacale sont ajustées des conditions permettant un échange de THFA avec H₂O d'au maximum 15 % en poids, en particulier de 10 à 15 % en poids.

6. Procédé selon l'une des revendications précédentes,
**caractérisé en ce**
**que** les microbilles (74) sont transférées dans la solution de vieillissement ammoniacale réglée sur la température ambiante, qui est ensuite portée à une température T1 de 60 °C ≤ T1 ≤ 80 °C, que les microbilles restent dans la solution de vieillissement à la température T1 pendant un temps t de 50 min ≤ t ≤ 70 min, et qu'après écoulement du temps t, la solution de vieillissement est refroidie à la température ambiante puis les microbilles extraites, sachant qu'en particulier que la solution de vieillissement est chauffée et refroidie par au moins un échangeur thermique.

7. Procédé selon la revendication 1,
**caractérisé en ce**
**que** les microbilles (74) sont conduites à travers plusieurs étages de lavage dans le laveur à cascades (28), sachant en particulier que la vitesse de chute des microbilles dans chaque étage de lavage est réglée par l'eau de lavage s'écoulant en circuit fermé dans ledit étage et qui est amenée à l'étage de lavage (30, 32, 34, 36, 38, 40, 42) de préférence via une fente annulaire à écartement variable présente dans le fond d'un entonnoir (44, 46).

8. Procédé selon la revendication 7,
**caractérisé en ce**
**qu'**en plus de l'eau de lavage introduite en circuit fermé dans chaque étage de lavage (30, 32, 34, 36, 38, 40, 42), de l'eau de lavage est introduite dans toutes les cascades en commençant par la plus basse, sachant de préférence que de l'eau ultra-pure faiblement ammoniacale ou de l'eau ultra-pure ammoniacale bimolaire est utilisée en tant qu'eau de lavage introduite dans la cascade inférieure (30).

9. Procédé selon la revendication 1,
**caractérisé en ce**
**que** les microbilles lavées (74) sont séchées dans un four continu pour feuillards, de préférence à une température T₂ de T₂ ≤ 120 °C, en particulier 100 °C ≤ T₂ ≤ 120 °C, sachant en particulier que les microbilles lavées (74) sont déposées avec l'eau de lavage et réparties régulièrement par un dispositif d'alimentation, tel qu'une trompe d'alimentation (72), sur un élément de convoyage (66) tel qu'une bande-tamis se déplaçant à travers le four continu pour feuillards, sachant que le cas échéant, un détergent tel qu'un alcool gras soluble dans l'eau est ajouté à l'eau de lavage avant le dépôt sur l'élément de convoyage.

10. Procédé selon la revendication 9,
**caractérisé en ce**
**qu'**après la traversée du four continu pour feuillards (64, 80), les microbilles séchées (noyaux) (76) sont retirées d'un dispositif de convoyage (66) transportant les microbilles au moyen d'un dispositif d'aspiration tel qu'une trompe aspirante (78, 104), séparées dans un séparateur à cyclone et rassemblées dans un réservoir.

11. Procédé selon la revendication 1,
**caractérisé en ce**
**que** les microbilles (74) dans la couche monomoléculaire sont convoyées dans des coques métalliques (82, 106) passant par un four continu (64, 80) et présentant des ouvertures sur leur fond, et sont calcinées, de préférence en deux étapes, à une température T3 de T3 ≤ 450 °C, en particulier 160 °C ≤ T3 ≤ 430 °C, sachant en particulier que les microbilles (74) dans le four continu pour feuillards (64, 80) traversent plusieurs zones de chauffage (92, 94, 96) avec au moins une zone de séchage et au moins une zone de calcination, et que de préférence le séchage et/ou la calcination est/sont effectué(e)(s) sous circulation d'air, et qu'en particulier les noyaux calcinés (76) sont aspirés de la coque métallique (82, 106) et que, le cas échéant, les noyaux aspirés (76) sont séparés dans un séparateur à cyclone (83) et rassemblés dans un réservoir.

12. Dispositif destiné à fabriquer des éléments de combustible et/ou de matière fertile de forme sphérique, comprenant un bain de précipitation (102), une ligne de vieillissement (18), un dispositif de lavage (28) et un dispositif de traitement thermique (64, 80, 90), ainsi que des dispositifs de transfert (10) pour les microbilles (74) produites pendant la fabrication et les noyaux (76) formés à partir desdites microbilles,
**caractérisé en ce**
**qu'**est disposé entre le bain de précipitation et la ligne de vieillissement (18) un premier dispositif de transfert sous forme d'un séparateur (10), qui présente un cylindre divisé en secteurs (14) pivotant sur un tamis (12) en guise de fond et présentant une découpe, sachant que successivement chaque secteur dans une première position recouverte du côté du fond par le tamis est aligné sur l'orifice de sortie du bain de précipitation (102) et après rotation d'un angle α du cylindre est aligné dans une deuxième position sur la découpe du tamis qui est reliée à la ligne de vieillissement (18), que chaque secteur présente la même superficie et que l'angle α est égal à α / n où n = nombre de secteurs.

13. Dispositif selon la revendication 12,
**caractérisé en ce**
**que** le cylindre (14) constitué de préférence de métal repose de manière étanche sur le tamis (12) qui est de préférence constitué d'acier spécial et présente une ouverture de maille d de 300 µm ≤ d ≤ 500 µm, sachant en particulier que le cylindre (14) est divisé en n secteurs, où n ≥ 3, en particulier n=6.

14. Dispositif selon la revendication 12 ou la revendication 13,
**caractérisé en ce**
**que** la ligne de vieillissement (18) comprend un cylindre creux recueillant les microbilles et entouré d'une gaze métallique ou d'une tôle perforée (22), ledit cylindre étant, pour assurer le transport de la solution de vieillissement, entouré à une certaine distance par un corps (20), sachant en particulier que le liquide de vieillissement circule dans un circuit comprenant au moins un échangeur thermique, circuit dans lequel est intégré le corps (20), et/ou que la ligne de vieillissement (18) est reliée à un deuxième dispositif de transfert conçu en tant que deuxième séparateur reliant pour le transport la ligne de vieillissement au dispositif de lavage (28), sachant que le deuxième séparateur présente de préférence une structure correspondant à celle du premier séparateur (10).

15. Dispositif selon l'une des revendications 12 à 14,
**caractérisé en ce**
**que** le dispositif de lavage (28) est un laveur à cascades avec m étages de lavage, où m ≥ 2, en particulier 2 ≤ m ≤ 8, de préférence m = 7, sachant que de préférence chaque étage de lavage présente à sa base un entonnoir (44, 46) avec une ouverture qui peut être obturée dans l'étendue souhaitée par un dispositif d'obturation (48, 50) avec tête de buse, que de préférence un circuit rempli d'une eau de lavage et présentant un segment tel qu'une conduite (52) aboutit au-dessous du dispositif d'obturation (48, 50), sachant que le cas échéant un élément de réglage, tel qu'une tige souple (60), relié au dispositif d'obturation (48, 50) s'étend à l'intérieur du segment et/ou de la conduite (52).

16. Dispositif selon l'une des revendications 12 à 15,
**caractérisé en ce**
**que** les microbilles lavées (74) peuvent être transportées à travers le four continu (64, 80) au moyen d'un dispositif de transport tel qu'une bande transporteuse sans fin (66), la bande transporteuse présentant au moins partiellement une gaze métallique, ou que les microbilles (74) peuvent être transportées à travers le four continu (80, 90) au moyen d'un dispositif de transport constitué de coques métalliques (82) alignées les unes derrière les autres, chaque coque métallique présentant un fond perforé avec une ouverture de maille comprise entre 300 µm et 500 µm, sachant que de préférence les microbilles (74) peuvent être déposées par un dispositif d'alimentation tel qu'une trompe d'alimentation (72) sur le dispositif de transport tel que la bande transporteuse (66) ou les coques métalliques (82), et/ou que les microbilles (76) séchées et/ou calcinées peuvent être aspirées du dispositif de transport par dépression, par exemple avec une trompe aspirante (78), sachant que le cas échéant, les microbilles (76) séchées et/ou calcinées peuvent être séparées de préférence par un séparateur à cyclone (83) et rassemblées dans un réservoir.
